## Europäisches Patentamt
## European Patent Office
## Office européen des brevets

(19)

(11) Veröffentlichungsnummer: **0 216 253 B1**

(12)

# EUROPÄISCHE PATENTSCHRIFT

(45) Veröffentlichungstag der Patentschrift:
29.11.89

(51) Int. Cl.⁴: **G06F 15/16**

(21) Anmeldenummer: 86112521.9

(22) Anmeldetag: 10.09.86

(54) Multi-Mikroprozessorsystem mit zeitsparender Adressierung von Schreib-Lese-Speichern.

(30) Priorität: 20.09.85 DE 3533607

(43) Veröffentlichungstag der Anmeldung:
01.04.87 Patentblatt 87/14

(45) Bekanntmachung des Hinweises auf die Patenterteilung:
29.11.89 Patentblatt 89/48

(84) Benannte Vertragsstaaten:
AT BE CH DE FR GB IT LI NL SE

(56) Entgegenhaltungen:
DE-A- 2 713 304

IBM TECHNICAL DISCLOSURE BULLETIN, Band 26,
Nr. 11, April 1984, Seiten 6139,6140, New York, US; D.L.
LIVINGSTON et al.: "Transparent hardware address
offset for use in a common memory, multiprocessor
environment"
PATENTS ABSTRACTS OF JAPAN, Band 6,
Nr. 53 (P-109)[931], 8. April 1982; &
JP-A-56 166 569 (FUJITSU K.K.) 21-12-1981

(73) Patentinhaber: Siemens Aktiengesellschaft,
Wittelsbacherplatz 2, D-8000 München 2(DE)

(72) Erfinder: Wolfdietrich, Günther, Korbinianstrasse 14,
D-8190 Wolfratshausen(DE)

## Beschreibung

Die Erfindung betrifft ein Multi-Mikroprozessorsystem mit zeitsparender Adressierung von Schreib-Lese-Speichern mit wenigstens zwei Mikroprozessoren nach dem Oberbegriff des Patentanspruchs 1.

Bei vielen Einsatzfällen von Multi-Mikroprozessorsystemen treten Zeitprobleme durch eine Adressenberechnung auf, wenn zu verarbeitende Daten eines Mikroprozessors in den Datenspeicher (Arbeitsspeicher) eines zweiten Mikroprozessors übergeben werden. Auch die Verwendung eines DMA-Controllers (direkt memory access) führt in vielen Fällen nicht zum gewünschten Erfolg, wenn die Daten nicht hintereinander in die Speicherzellen des Schreib-Lese-Speichers eingeschrieben werden können, sondern an vorgegebenen Speicherplätzen innerhalb von dateimäßig aufgebauten Speicherbereichen eingeschrieben werden sollen.

Ein solches Multi-Mikroprozessorsystem kann beispielsweise im zentralen Verarbeitungsteil einer Kennzeichenumsetzer-Zentrale eines Zeitmultiplex-Übertragungssystems eingesetzt werden. Ein Kennzeichenumsetzergerät hat die Aufgabe, die vermittlungstechnische Information zu digitalisieren und in eine für die digitale Datenübertragung geeignete Form umzusetzen. Die vermittlungstechnischen Signale (Schaltkennzeichen) auf der analogen Übertragungsseite werden in Kennzeichenwörter umgesetzt und in einen Zeitmultiplexrahmen eingefügt übertragen. Ein Kennzeichen umsetzergerät für das Zeitmultiplex-Übertragungssystem PCM 30 ist in der Siemens Zeitschrift 49 (1975), Heft 7, Seite 466 bis 472 beschrieben. Aus der europäischen Patentschrift 0 002 467 ist eine Kennzeichenumsetzer-Zentrale bekannt, deren zentraler Verarbeitungsteil mit Hilfe von Rechnerschaltung realisiert ist. Eine Ausführung des zentralen Verarbeitungsteils ist nicht beschrieben.

Beim jetzigen Stand der technischen Entwicklung werden Multi-Mikroprozessorsysteme verwendet. Aus Kosten- und Platzgründen wird die Anzahl der Mikroprozessoren möglichst gering gehalten.

Aufgabe der Erfindung ist es, eine möglichst einfache und schnelle Datenübertragung zwischen zwei Mikroprozessoren eines Multi-Mikroprozessorsystems zu ermöglichen.

Die Aufgabe wird durch die im Patentanspruch 1 angegebenen Merkmale gelöst.

Vorteilhafte Ausbildungen der Erfindung sind in den Unteransprüchen angegeben.

Durch die unterschiedliche Anschaltung der Adressenports der Schreib-Lese-Speicher ist es möglich, mit einem einzigen Dekrementier- oder Inkrementierbefehl die Adressen zweier nach unterschiedlichen Gesichtspunkten organisierter Datenspeicher anzusprechen und Daten an den zweiten Mikroprozessor zu übergeben. Hierbei sind aufgrund der Verdrahtung verschiedene Dateiorganisationen in den Datenspeichern möglich. Beispielsweise können Dateibereiche geschaffen werden, die alle Daten eines Fernsprechkanals umfassen oder es werden Dateien getrennt für empfangene und auszusendende Daten geschaffen, die in sich wiederum nach Fernsprechkanälen geordnet sind.

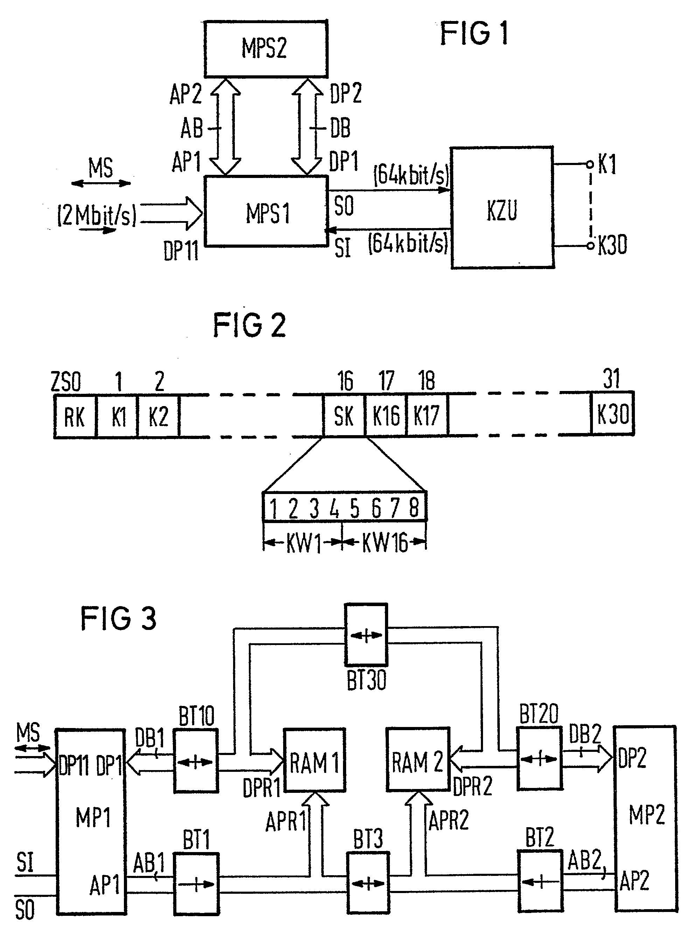

Durch eine an sich bekannte Anordnung von Bustrennstufen ist es möglich, daß jeder Mikroprozessor gleichzeitig eine Zugriffsmöglichkeit zum Schreib-Lese-Speicher des mit ihm korrespondierenden Mikroprozessors hat. Ein Ausführungsbeispiel der Erfindung wird anhand der Figuren 1 bis 6 näher erläutert.

Es zeigen

Fig. 1 ein Kennzeichenumsetzergerät,
Fig. 2 einen Pulsrahmen,
Fig. 3 ein Multi-Mikroprozessorsystem,
Fig. 4 ein weiteres Ausführungsbeispiel eines Multi-Mikroprozessorsystems,
Fig. 5 ein Adressierungsprinzip und
Fig. 6 ein Ausführungsbeispiel der Verdrahtung.

In Fig. 1 ist ein Kennzeichenumsetzergerät prinzipiell dargestellt, das zwei Mikroprozessorsysteme MPS1 und MPS2 enthält, die über einen Adressenbus AB und einen Datenbus DB miteinander verbunden sind. Die Adressenports sind mit AP1 und AP2, die Datenports mit DP1 und DP2 bezeichnet. Das erste Mikroprozessorsystem MPS1 weist einen zweiten Datenport DP11 auf, dem ein Multiplexsignal MS zugeführt ist und an dem über eine hier nicht dargestellte Multiplexeinrichtung Kennzeichenwörter zum Einfügen in den Pulsrahmen eines auszusendenden Multiplexsignals abgegeben werden. Über einen seriellen Ausgang SO wird Kennzeicheninformation zu einem Kennzeichenumsetzer KZU gesendet und über einen seriellen Eingang SI Kennzeicheninformation von dem Kennzeichenumsetzer empfangen. An den Kennzeichenumsetzer sind Fernsprechkanäle K1 bis K30 angeschlossen. Obwohl die Erfindung keineswegs auf die Anwendung in Kennzeichenumsetzern beschränkt ist, soll sie anhand einer solchen Einrichtung, die für das Zeitmultiplex-Übertragungssystem PCM 30 konzipiert ist, erklärt werden. Die in Fig. 1 angegebenen Schrittgeschwindigkeiten beziehen sich auf dieses System.

In Fig. 2 ist der Pulsrahmen des Multiplexsignal MS dargestellt. Er enthält 32 Zeitschlitze ZS0 bis ZS31 mit jeweils 8 Bits Breite. Im Zeitschlitz ZS0 wird ein Rahmenkennungswort RK und ein Meldewort übertragen, in den folgenden Zeitschlitzen ZS1 bis ZS15 die digitalisierten Abtastwerte der Fernsprechkanäle K1 bis K15. Im Zeitschlitz ZS16 werden zwei 4 Bits breite Kennzeichenwörter KW1 und KW16 übertragen, die vermittlungstechnische Information der Fernsprechkanäle K1 und K16 enthalten. Die übrigen Zeitschlitze ZS17 bis ZS31 dienen der Übertragung von Abtastwerten der Fernsprechkanäle K16 bis K30. Jeweils nach der Übertragung von 15 dieser Pulsrahmen wird im Signalisierungskanal SK, dieser entspricht dem Zeitschlitz ZS16, ein Mehrfachrahmen-Kennungswort zur Kennzeichnung des Beginns des Überrahmens ausgesendet.

In Fig. 3 ist ein Multi-Mikroprozessorsystem mit einem ersten Mikroprozessor MP1 und einen zweiten Mikroprozessor MP2 prinzipiell dargestellt. Auf die Darstellung von externen Programmspeichern wurde aus Gründen der Übersichtlichkeit verzichtet. Es kann ebenso angenommen werden, daß die Mikroprozessoren interne Programmspeicher aufweisen. Der Datenport DP1 des ersten Mikroprozessors MP1 ist über einen Datenbus DB1 und über eine erste Datenbus-Trennstufe BT10 mit dem Datenport DPR1 seines Datenspeichers RAM1 verbunden. Als Datenspeicher werden Schreib-Lese-Speicher (RAM) verwendet. In derselben Weise ist der Datenport DP2 des zweiten Mikroprozessors MP2 über seinen Datenbus DB2 und über eine zweite Datenbus-Trennstufe BT20 mit dem Datenport DPR2 seines Datenspeichers RAM2 verbunden. Die Datenports DPR1 und DPR2 sind über eine weitere Datenbus-Trennstufe BT30 miteinander verbunden. Die Datenbus-Trennstufen enthalten Schaltelemente die es ermöglichen, elektrische Signale in beiden Richtungen zu übertragen.

In derselben Weise ist der Adressenport AP1 des ersten Mikroprozessors über einen Adressenbus AB1, eine Adressenbus-Trennstufe BT1 mit dem Adressenport APR1 des ersten Datenspeichers RAM1 verbunden. Ebenso ist der Adressenport AP2 des zweiten Mikroprozessors MP2 über einen Adressenbus AB2 und eine zweite Adressenbus-Trennstufe BT2 mit dem Adressenport APR2 des zweiten Datenspeichers RAM2 verbunden. Beide Adressenports sind über eine weitere Adressenbus-Trennstufe BT3 miteinander verbunden, die im Gegensatz zu den beiden anderen Adressenbus-Trennstufen Signale in beiden Richtungen durchschaltet.

Bei dieser Schaltungsanordnung haben beide Mikroprozessoren in gewohnter Weise Zugriff zu ihren Datenspeichern. Die Bustrennstufen BT3 und BT30 sind hierbei gesperrt. Ebenso kann jedoch beispielsweise der erste Mikroprozessor MP1 bei gesperrten Bustrennstufen BT2 und BT20 und durchgeschalteten Bustrennstufen BT3 und BT30 beide Datenspeicher adressieren und hat Zugriff zu beiden Datenports. Ebenfalls kann auch nur der zweite Datenspeicher RAM2 des zweiten Mikroprozessors über einen Aktivierungseingang (enable) angesprochen werden. Dies kann über ein spezielles nicht zur Adressierung benötigtes Bit der am Adressenport AP1 ausgegebenen Adresse geschehen. In derselben Weise hat der zweite Mikroprozessor MP2 Zugriffsmöglichkeiten zum Datenspeicher RAM1 des ersten Mikroprozessors.

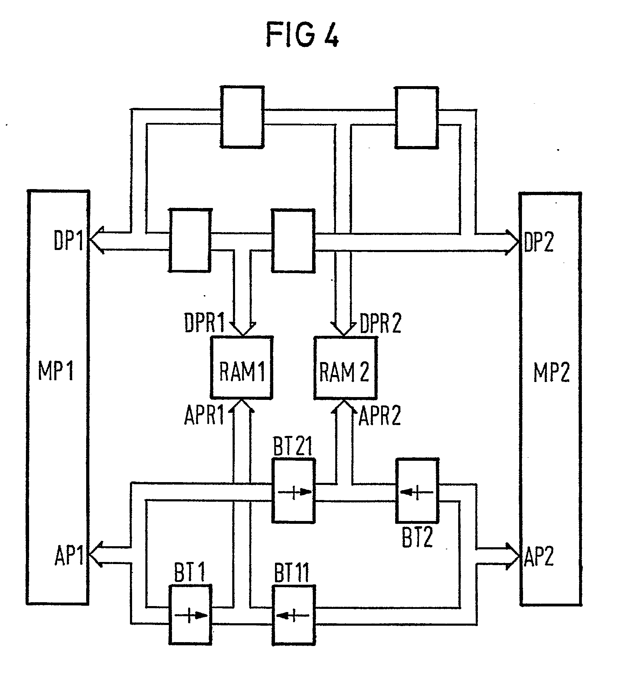

In Fig. 4 ist ein erweitertes Multi-Mikroprozessorsystem dargestellt, daß sowohl einen gleichzeitigen Zugriff jedes Mikroprozessors zu beiden Datenspeichern gestattet, als auch einen gleichzeitigen Zugriff zu den Datenspeichern des anderen Mikroprozessors. Dies wird erreicht, indem der Adressenport AP1 wie bisher über eine erste Adressenbus-Trennstufe BT1 mit dem Adressenport APR1 seines Datenspeichers RAM1 verbunden ist und über eine zweite Adressenbus-Trennstufe BT21 mit dem Adressenport APR2 des Datenspeichers RAM2 des zweiten Mikroprozessors MP2 verbunden ist. In derselben Weise ist der Adressenport AP2 des zweiten Mikroprozessors über die Adressenbus-Trennstufe BT2 mit dem Adressenport APR2 seines Datenspeichers RAM2 verbunden und über eine zusätzliche Adressenbus-Trennstufe BT11 mit dem Adressenport APR1 des ersten Datenspeichers RAM1 verbunden ist. Die Adressenports der beiden Datenspeicher können somit von jedem Mikroprozessor MP2 parallel als auch seperat angesteuert werden. Selbstverständlich muß dafür gesorgt werden, daß jeweils nur ein Mikroprozessor an einen Datenspeicher angeschaltet ist. Die Datenports DP1 und DP2 der Mikroprozessoren sind in derselben Weise an die Datenports DPR1 und DPR2 der Datenspeicher angeschaltet.

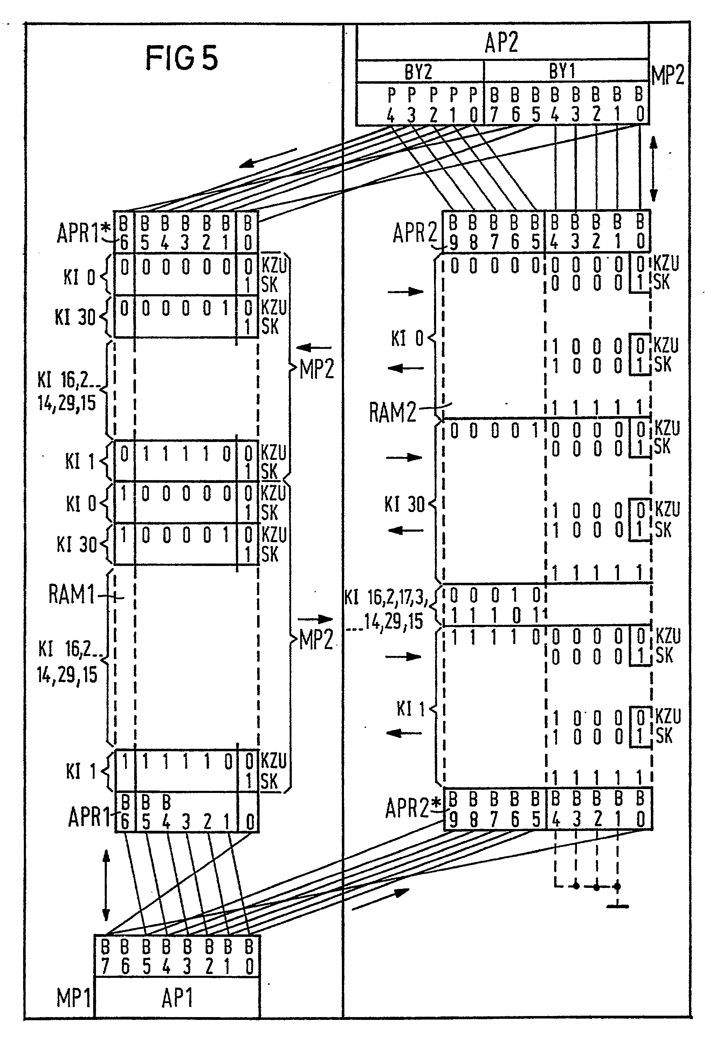

Das Problem besteht nun darin, in den Datenspeicher des anderen Mikroprozessorsystems mit derselben Adresse wie beim eigenen Datenspeicher Daten in andere Speicherbereiche einzuschreiben (oder zu lesen), um nicht durch aufwendige Adressenrechnungen Zeit zu verlieren. Erfindungsgemäß wird dies durch eine spezielle Verdrahtung der Leitungen des Adressenbusses erreicht. Dies ist in Fig. 5 dargestellt. Vom ersten Mikroprozessor MP1 ist der Adressenport AP1 mit seinen Adressenausgängen B0 bis B7 dargestellt. Der zugehörige Datenspeicher RAM1 ist hier zunächst in zwei Bereiche unterteilt. In den oberen Bereich werden die vom zweiten Mikroprozessor MP2 kommenden Daten eingeschrieben und der untere Bereich enthält die ebenfalls in den Datenspeicher des zweiten Mikroprozessors eingeschriebenen Daten. Hier soll nur der Fall angenommen werden, daß dieselben Daten bei derselben an einem Adressenport eines Mikroprozessors anliegenden Adresse in verschiedene Bereiche der zwei Datenspeicher eingeschrieben werden. Die Adressenports weisen Adressenausgänge bzw. Adresseneingänge auf, wobei einander entsprechende Anschlußpunkte gleiche Bezeichnungen B0 bis B7 tragen. Das niederwertigste Bit $B_0$ wird hierbei am "niederwertigsten" Adressenausgang B0 abgegeben usw..

In Fig. 5 sind für jeden Datenspeicher aus Gründen der Übersichtlichkeit zwei Adressenports APR1 und APR1* bzw. APR2 und APR2* dargestellt. Diese entsprechen z.B. in der Ausführung des Multi-Mikroprozessorsystems nach Fig. 3, den Ausgängen der Adressenbus-Trennstufen BT1 und BT3, und in einer Ausführung nach Fig. 4, den Adressenbus Trennstufen BT1 und BT11. In Fig. 5 sind außerdem die Speicheradressen angegeben, unter denen die Kennzeicheninformation KI 0 bis KI 30 gespeichert ist. Die Zugehörigkeit der Daten zum Kennzeichenumsetzer oder zum Signalisierungskanal ist mit KZU bzw. SK gekennzeichnet.

Der Adressenport APR1 des ersten Datenspeichers ist mit dem Adressenport AP1 des ersten Mikroprozessors MP1 verbunden. Ebenso ist der Adressenport APR2* des zweiten Datenspeichers RAM2 mit dem Adressenport AP1 des ersten Mikroprozessors verbunden. In einer Schaltungsanordnung nach Fig. 3 oder Fig. 4 folgt dies über die Adressenbus-Trennstufen BT1 und BT3 oder BT21. Es ist hierbei gleichgültig, ob die Verbindung vom Adressenport AP1 des ersten Mikroprozessors MP1 entsprechend Fig. 3 über den Adressenport des ersten Datenspeichers RAM1 zum Adressenport APR2 des zweiten Datenspeichers RAM2 erfolgt oder, wie in Fig. 5 entsprechend Fig. 4 dargestellt, jeweils zwischen dem Adressenport AP1 und den Adressports APR1 und APR2 der Datenspeicher direkt hergestellt wird.

Der niederwertigste Adressenausgang B0 des Adressenports AP1 ist in Fig. 5 mit dem zweitniederwertigsten Adresseneingang B1 des Adressenports APR1 verbunden. Ebenso sind die weiteren 5 niederwertigen Adressenausgänge B1 bis B5 des Adressenports AP1 mit den niederwertigen Adresseneingängen B2 bis B6 des Adressenports APR1 verbunden. Oder allgemein ausgedrückt, die Datenausgänge B0 bis B5 sind jeweils mit einem um m = 1 höherwertigeren Adresseneingang B1 bis B6 verbunden. Der höchstwertige Adressenausgang B7 ist mit dem niederwertigsten Adresseneingang B0 des Adressenports APR1 verbunden.

Der Datenspeicher RAM2 des zweiten Mikroprozessors weist einen größeren Speicherumfang auf und benötigt deshalb ein entsprechend breites Adressenwort. Der niederwertigste Adressenausgang B0 des Adressenports AP1 ist mit dem Adresseneingang B5 des Adressenports APR2* verbunden, die weiteren Adressenausgänge B1 bis B4 des Adressenports AP1 sind mit den Adresseneingängen B6 bis B9 des Adressenports APR2* verbunden. Wieder allgemein ausgedrückt, die zur Adressierung der Dateibereiche verwendeten Adressenausgänge B0 bis B4 sind mit um n = 5 höherwertigen Adresseneingängen B5 bis B9 verbunden. Das Bit $B_5$ wird zur Übergabe der Information "Schreiben" verwendet. Der höchstwertige Adressenausgang B7 des Adressenports AP1 ist mit dem niederwertigsten Adresseneingang B0 des Adressenports APR2* verbunden. An die übrigen Adresseneingänge B1 bis B4 des Adressenports APR2* wird vor dem Einschreiben von Daten jeweils eine logische Null als Adresse angelegt.

Aufgrund dieser Schaltungsanordnung ist es möglich, dieselben Daten vom ersten Mikroprozessor aus in unterschiedliche Dateibereiche des ersten und des zweiten Datenspeichers einzuschreiben.

Für einige Anwendungen ist dies ausreichend und ein Einschreiben von Daten vom zweiten Mikroprozessor MP2 in den ersten Datenspeicher RAM1 (oder umgekehrt) nicht erforderlich.

Bei der Schaltungsanordnung nach Fig. 3 ist es dann nicht erforderlich, daß die Adressenbus-Trennstufe BT3 und die Datenbus-Trennstufe BT30 in beiden Übertragungsrichtungen arbeitet bzw. in einer Schaltungsanordnung nach Fig. 4 die Adressenbus-Trennstufe BT11 und die entsprechende Datenbus-Trennstufe entfallen.

Die weitere Beschreibung bezieht sich auf ein Multi-Mikroprozessorsystem, bei dem eine Datenübertragung in beiden Richtungen möglich ist. Bis auf die Übertragung vom zweiten Mikroprozessor MP2 zum ersten Datenspeicher RAM1 (oder umgekehrt) gilt aber die Beschreibung ebenfalls, wenn nur in einer Richtung Daten übertragen werden.

Der Adressenport AP2 des zweiten Mikroprozessors MP2 umfaßt zwei Bytes BY1 und BY2. Die Adressenausgänge B0 bis B4 des ersten Bytes BY1 sind direkt mit den Adresseneingängen B0 bis B4 des Adressenports APR2 verbunden. Das folgende Bit $B_5$ am Adressenausgang B5 dient wiederum zur Übergabe des Befehls "Schreiben" an den ersten Datenspeicher RAM1. Der folgende Adressenausgang B6 dient Testzwecken und ist mit dem höchstwertigen Adresseneingang B6 des Adressenports APR1* verbunden. Das höchstwertige Bit B7 des ersten Bytes BY1 wird hier nicht benötigt. Dagegen sind die Adressenausgänge P0 bis P4 (Bits $P_0$ bis $P_4$) mit den Adressenausgängen B5 bis B9 des Adressenports APR2 verbunden und mit den Adresseingängen B1 bis B5 des Adressenports APR1*. Der niederwertigste Adresseneingang B0 des Adressenports APR1* ist an den niederwertigsten Adresseneingang B0 des Adressenports AP2 angeschaltet.

Der zweite Datenspeicher RAM2 ist in 31 Bereiche mit jeweils 32 Speicherplätzen eingeteilt, die beispielsweise jeweils ein Byte umfassen. Die den einzelnen Kanälen zugeordneten Dateibereiche sind mit KI 0 bis KI 30 in bei den Datenspeichern bezeichnet. Jeder Dateibereich enthält sowohl die zum ersten Datenspeicher RAM1 übertragene Daten, als auch Daten die vom ersten Mikroprozessor MP1 in den zweiten Datenspeicher RAM2 übertragen werden und weitere hier nicht relevante Daten des entsprechenden Fernsprechkanals.

In den unteren Speicherbereich des ersten Datenspeichers RAM1 und jeweils in die ersten Speicherplätze jedes einem Kanal zugeteilten Dateibereiches des zweiten Datenspeichers RAM2 werden Daten vom ersten Mikroprozessor MP1 aus eingeschrieben. Dies ist durch Pfeile angedeutet.

Vom Mikroprozessor MP1 werden zugehörige Daten, z.B. die Kennzeicheninformation KI 30 - rechts mit KZU bezeichnet - jeweils bei einer Adressenänderung durch einen Dekrementierbefehl (oder auch durch einen Inkrementierbefehl) im Abstand von zwei Speicherplätzen (2 Bytes) eingeschrieben. Über die Verdrahtung zum Adressenport APR2* des zweiten Datenspeichers werden dieselben Daten jeweils im Abstand von 32 Speicherplätzen zu Beginn jedes Dateibereiches eingeschrieben. Entsprechend der Zugehörigkeit der Daten zum Kennzeichenumsetzer KZU oder zum Signalisierungskanal SK erfolgt die Auswahl durch das höchstwertige Bit B7 des Adressenports AP1. Die Anordnung bietet folglich den Vorteil durch einfaches Dekrementieren bzw. Inkrementieren der Adresse des Mikroprozessors MP1 jeweils in den nächsten Dateibereich des ersten Datenspeichers RAM1 als auch des zweiten Datenspeichers RAM2 zu gelangen.

Beispielsweise ist die Kennzeicheninformation KI 1 im ersten Datenspeicher unter der höchstwertigen Adresse 1111101 und 1111100 abgespeichert, im zweiten Datenspeicher unter 11 1100 0001 und 11 1100 0000.

Als nächstes ist entsprechend Fig. 2 (die Kennzeichen wörter des 1. und des 16. Fernsprechkanals werden gemeinsam in einem Zeitschlitz des Signalisierungskanals SK übertragen) jeweils an derselben Stelle des nächsten Dateibereiches die Signalisierungsinformation für den Kanal 16 eingespeichert usw. bis die Signalisierungsinformation KI 30 unter 100 0011 und 100 0010 im ersten Datenspeicher RAM1 bzw. unter 00 0010 0001 und 00 0010 0000 im zweiten Datenspeicher RAM2 eingespeichert ist. Es folgt jeweils ein Speicherbereich für die Signalisierungsinformation KI 0. Entsprechendes gilt auch beim Dekrementieren bzw. Inkrementieren des zweiten Bytes der Adresse des zweiten Mikroprozessors MP2. Wird wie in Fig. 5 eine Adressenänderung durch Dekrementierung durchgeführt, so erleichtert eine programmmäßige Nullabfrage des Adressenzählers die Feststellung, daß ein Mehrfachrahmen abgearbeitet ist.

Darüber hinaus ist es selbstverständlich möglich, daß sämtliche Speicherplätze des zugehörigen Datenspeichers RAM2 vom zweiten Mikroprozessor adressiert werden.

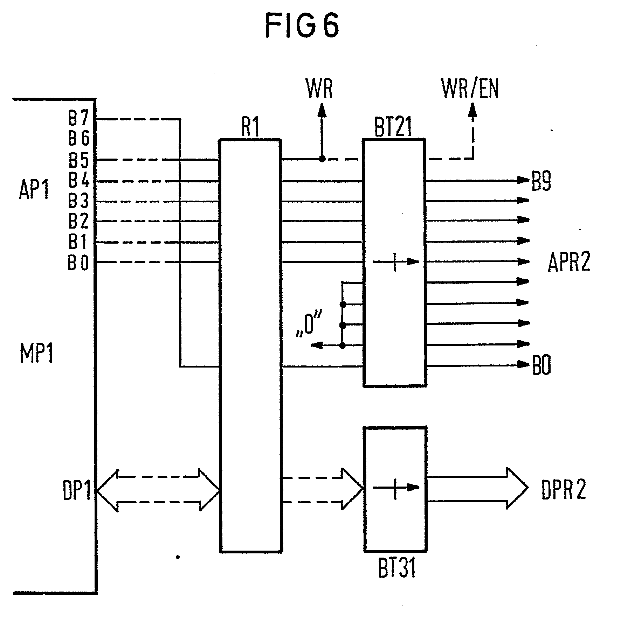

Anhand der Fig. 6 soll zunächst die Ansteuerung des zweiten Datenspeichers RAM2 vom ersten Mikroprozessor MP1 aus näher erläutert werden. Für die Ansteuerung des ersten Datenspeichers RAM1 vom zweiten Mikroprozessor MP2 gilt entsprechendes. Bei der Schaltungsanordnung wird die in Fig. 4 dargestellte Variante wiedergegeben. Die Verzweigung von Adressenport AP1 ist durch gestrichelte Adressenleitungen angedeutet. Als Besonderheit ist zwischen der Adressenbus-Trennstufe BT31 und dem Adressenport AP1 ein Register R1 eingeschaltet. In dieses werden sowohl die Adresse als auch die zugehörigen Daten vom Datenport DP1 des ersten Mikroprozessors eingespeichert. Die Ausgänge des Registers sind über eine Adressen-Bustrennstufe BT21 und eine Daten-Bustrennstufe BT31 (in Fig. 4 nicht dargestellt) mit dem Adressenport APR2 bzw. mit dem Datenport DPR2 verbunden. Das Bit B5 wird nicht zur Adressierung des zwei ten Datenspeichers benötigt, sondern gibt lediglich an, daß Daten vorliegen, die auch in den zweiten Datenspeicher eingeschrieben werden sollen. Wenn es vom Programmablauf möglich ist, d.h. wenn der zweite Mikroprozessor nicht gerade seinem Datenspeicher benötigt, so werden die Bustrennstufen BT21, BT31 durchgeschaltet und die Daten können eingeschrieben werden. An die Eingänge B1 bis B4 für die Adressenbits $B_1$ bis $B_4$ werden über die Adressen-Bustrennstufen logische Nullen angelegt und somit die gewünschte Adressierung erreicht.

Das Adressenbit $B_5$ ist außerdem mit dem Adresseneingang B6 des ersten Datenspeichers RAM1 verbunden (Fig. 5). Hierdurch wird der untere Speicherbereich adressiert, in den die Daten eingespeichert werden, die gleichzeitig in den zweiten Datenspeicher übertragen werden.

Die Adressierung des zugehörigen zweiten Datenspeichers RAM2 durch den zweiten Mikroprozessor MP2 weist die Besonderheit auf, daß die Dateibereiche über das zweite Byte BY2 adressiert werden und die Adressierung innerhalb eines Dateibereiches über das zweite Byte erfolgt. Über das zweite Byte BY2 werden auch die Dateibereiche des oberen Speicherbereichs des Datenspeichers 1 adressiert, in den Daten vom zweiten Mikroprozessor MP2 aus eingeschrieben werden. Die Auswahl KZU oder SK erfolgt über das niederwertigste Bit $B_0$ des ersten Bytes.

Bei der beschriebenen Form der Adressierung des zweiten Datenspeichers RAM2 durch den ersten Mikroprozessor MP1 erfolgt gleichzeitig eine Beschränkung des Zugriffs auf die relevanten Speicherplätze.

Es ist natürlich nicht notwendig, die Dateibereiche derart geordnet in den Datenspeichern einzuordnen. Es ist nur eine adressenmäßige Ordnung - gesehen von den Adres senports der Mikroprozessoren - notwendig. Es können demzufolge beispielsweise die Adresseneingänge des Adressenports APR1 beliebig vertauscht werden, wenn die gleiche Vertauschung auch bei der Ansteuerung des zweiten Datenspeichers RAM2 vom zweiten Mikroprozessor aus berücksichtigt wird.

## Patentansprüche

1. Multi-Mikroprozessorsystem für vermittlungstechnische Einrichtungen mit wenigstens zwei Mikroprozessoren (MP1,MP2), die jeweils einen externen Datenspeicher (RAM1,RAM2) aufweisen, in denen Dateien von vermittlungstechnischen Informationen von Fernsprechkanälen gespeichert werden, und deren Adressenports (AP1,AP2) und Datenports (DP1,DP2) jeweils über Adressenbus- (BT3) bzw. Datenbus-Trennstufen (BT30) mit dem Adressenport (APR2,APR1) und Datenport (DP2,DP1) des Datenspeichers (RAM2,RAM1) des anderen Mikroprozessors anschaltbar sind, **gekennzeichnet durch folgende Merkmale:**

I. Die Verbindung zwischen dem Adressenport (AP1) des ersten Mikroprozessors (MP1) und dem Adressenport (APR1) des zugehörigen ersten Datenspeichers (RAM1) ist in folgender Weise herstellbar:

a) Der niederwertigste Adressenausgang (B0) ist mit dem des ersten Mikroprozessors um "m" (z.B. 1) höherwertigen Adresseneingang (B1) des ersten Datenspeichers (RAM1) verbunden, die weiteren zur Adressierung verwendeten Adressenausgänge (B2 bis B4) sind entsprechend mit den um "m" (1) höherwertigen Adresseneingängen (B2 bis B5) verbunden.

b) Die "m" (1) höchstwertigen Adressenausgänge (B7) sind mit den "m" (1) niederwertigsten Adresseneingängen (B0) verbunden.

II. Die Verbindung zwischen dem Adressenport (AP1) des ersten Mikroprozessors (MP1) und dem Adressenport (APR2) des zweiten Datenspeichers (RAM2) ist in folgende Weise herstellbar:

a) Der niederwertigste Adressenausgang (B0) des ersten Mikroprozessors (MP1) ist mit dem um "n" (n = 5) höherwertigen Adresseneingang (B5) des zweiten Datenspeichers (RAM2) verbunden, die weiteren zur Adressierung verwendeten Adressenausgänge (B1 bis B4) sind entsprechend mit den um "n" (5) höherwertigen Adresseneingängen (B6 bis B9) verbunden.

b) Die "m" (1) höchstwertigen Bits (B7) sind mit den "m" (1) niederwertigsten Adresseneingängen (B0) verbunden.

c) Den (m-n) nicht mit dem Adressenport (AP1) des ersten Mikroprozessors (MP1) verbundenen Adresseneingängen (B1 bis B4) des zweiten Datenspeichers (RAM2) wird eine konstante Binärkombination (0000) zugeführt.

2. Multi-Mikroprozessorsystem nach Anspruch 1, **gekennzeichnet durch** folgende Merkmale:

I. Am Adressenport (AP2) wird eine aus zwei Adressenwörtern (BY1,BY2) bestehende Adresse abgegeben.

II. Die Verbindung zwischen dem Adressenport (AP2) des zweiten Mikroprozessors (MP2) und dem Adressenport (APR2) seines zugehörigen zweiten Datenspeichers (RAM2) ist auf folgende Weise herstellbar:

   a) Die niederwertigsten Adressenausgänge (B0 bis B4) für das erste Adressenwort (BY1), die den Umfang eines Dateibereichs für einen Fernsprechkanal bestimmen, sind mit den niederwertigsten Adresseneingängen (B0 bis B4) verbunden.

   b) Die niederwertigeren Adressenausgänge (P0 bis P4) für das zweite Adressenwort (BY2), die die Anzahl (31) der vom zweiten Mikroprozessor (MP2) adressierbaren Dateibereiche angeben, sind mit den höherwertigeren Adresseneingängen (B5 bis B9) verbunden.

III. Die Verbindung zwischen dem Adressenport (AP2) des zweiten Mikroprozessors (MP2) und dem Adressenport (APR1) des ersten Datenspeichers (RAM1) in folgender Weise herstellbar ist:

   a) Der niederwertigste Adressenausgang (P0) des zweiten Adressenwortes (BY2) ist mit dem um "m" (1) höherwertigen Adresseneingang (B1) verbunden, die weiteren zur Adressierung verwendeten Adressenausgänge (P1 bis P4) sind entsprechend mit den um "m" (1) höherwertigeren Adresseneingängen (B2 bis B5) verbunden.

   b) Die niederwertigsten "m" Adressenausgänge (B0) des ersten Adressenwortes (BY1) sind mit den "m" (1) niederwertigsten Adresseneingängen (B0) verbunden.

3. Multi-Mikroprozessorsystem nach Anspruch 1, **dadurch gekennzeichnet,** daß der nächsthöherwertige Adressenausgang (B5) des ersten Mikroprozessors (MP1) mit dem um "m" (1) höherwertigen Adresseneingang (B6) seines zugehörigen ersten Datenspeichers verbunden ist und daß ein logischer Zustand des an diesem Adressenausgang (B5) oder an einem nicht zur Adressierung benötigten weiteren Adressenausgang als Einschreibebefehl (WR) in den ersten und/oder den zweiten Datenspeicher (RAM2) abgegeben wird.

4. Multi-Mikroprozessorsystem nach Anspruch 2, **dadurch gekennzeichnet,** daß an einem nicht zur Adressierung des zweiten Datenspeichers (RAM2) benötigten Adressenausgang (B5) des Adressenports (AP2) des zweiten Mikroprozessors (MP2) ein logischer Zustand als Einschreibebefehl (WR) für den ersten Datenspeicher abgegeben wird.

5. Multi-Mikroprozessorsystem nach Anspruch 1, **dadurch gekennzeichnet,** daß der Adressenausgang (B5), an dem der Schreibbefehl (WR) abgegeben wird, oder ein weiterer zur Adressierung nicht benötigter Adressenausgang (B6) an den höchstwertigen Adresseneingang (B7) des ersten Datenspeichers (RAM1) angeschaltet ist.

6. Multi-Mikroprozessorsystem nach einem der vorhergehenden Ansprüche, **dadurch gekennzeichnet,** daß m = 1 und n = 5 ist.

**Claims**

1. Multi-microprocessor system for switching equipment with at least two microprocessors (MP1, MP2) which each have an external data memory (RAM1, RAM2) in which files with switching information of telephone channels are stored, and the address ports (AP1, AP2) and data ports (DP1, DP2) of which can be connected to the address port (APR2, APR1) and data port (DP2, DP1) of the data memory (RAM2, RAM1) of the other microprocessor in each case via address bus separator stages (BT3) or data bus separator stages (BT30), characterized by the following features:

I. The connection between the address port (AP1) of the first microprocessor (MP1) and the address port (APR1) of the associated first data memory (RAM1) can be established in the following way:

   a) The lowest order address output (B0) is connected to the address input (B1) of the first data memory (RAM1) of higher order than the first microprocessor by "m" (e.g. 1), the further address outputs (B2 to B4) used for addressing are correspondingly connected to the address inputs (B2 to B5) of higher order by "m" (1).

   b) The "m" (1) highest order address outputs (B7) are connected to the "m" (1) lowest order address inputs (B0).

II. The connection between the address port (AP1) of the first microprocessor (MP1) and the address port (APR2) of the second data memory (RAM2) can be established in the following way:

   a) The lowest order address output (B0) of the first microprocessor (MP1) is connected to the address input (B5) of the second data memory (RAM2) of higher order by "n" (n=5), the further address outputs (B1 to B4) used for addressing are correspondingly connected to the address inputs (B6 to B9) of higher order by "n" (5).

   b) The "m" (1) highest order bits (B7) are connected to the "m" (1) lowest order address inputs (B0).

   c) A constant binary combination (0000) is fed to the (m–n) address inputs (B1 to B4) of the second data memory (RAM2) which are not connected to the address port (AP1) of the first microprocessor (MP1).

2. Multi-microprocessor system according to Claim 1, characterized by the following features:

I. An address consisting of two address words (BY1, BY2) is output at the address port (AP2).

II. The connection between the address port (AP2) of the second microprocessor (MP2) and the address port (APR2) of its associated second data memory (RAM2) can be established in the following way:

   a) The lowest order address outputs (B0 to B4)

for the first address word (BY1), which determine the extent of a file area for a telephone channel, are connected to the lowest order address inputs (B0 to B4).

b) The lower order address outputs (P0 to P4) for the second address word (BY2), which specify the number (31) of file areas which can be addressed by the second microprocessor (MP2), are connected to the higher order address inputs (B5 to B9).

III. The connection between the address port (AP2) of the second microprocessor (MP2) and the address port (APR1) of the first data memory (RAM1) can be established in the following way:

a) The lowest order address output (P0) of the second address word (BY2) is connected to the address input (B1) of higher order by "m" (1), the further address outputs (P1 to P4) used for addressing are correspondingly connected to the address inputs (B2 to B5) of higher order by "m" (1).

b) The lowest order "m" address outputs (B0) of the first address word (BY1) are connected to the "m" (1) lowest order address inputs (B0).

3. Multi-microprocessor system according to Claim 1, characterized in that the next higher order address output (B5) of the first microprocessor (MP1) is connected to the address input (B6) of higher order by "m" (1) of its associated first data memory, and in that a logical state is output at this address output (B5) or at a further address output not required for addressing as a write instruction (WR) into the first and/or the second data memory (RAM2).

4. Multi-microprocessor system according to Claim 2, characterized in that a logical state is output as a write instruction (WR) for the first data memory at an address output (B5), which is not required for addressing the second data memory (RAM2), of the address port (AP2) of the second microprocessor (MP2).

5. Multi-microprocessor system according to Claim 1, characterized in that the address output (B5) at which the write instruction (WR) is output, or a further address output (B6) not required for addressing is connected to the highest order address input (B7) of the first data memory (RAM1).

6. Multi-microprocessor system according to one of the preceding claims, characterized in that m=1 and n=5.

**Revendications**

1. Système à multimicroprocesseurs pour dispositifs relatifs à la commutation, comprenant au moins deux microprocesseurs (MP1, MP2) présentant chacun une mémoire de données (RAM1, RAM2), externe, mémoires dans lesquelles sont stockés des fichiers contenant des informations relatives à la commutation de voies téléphoniques, et dont les ports d'adresses (AP1, AP2) et les ports de données (DP1, DP2) peuvent être connectés chacun à travers des étages séparateurs de bus d'adresses (BT3) et de bus de données (BT30) au port d'adresses (APR2, APR1) et au port de données (DP2, DP1) de la mémoire de données (RAM2, RAM1) de l'autre microprocesseur, caractérisé en ce que:

I. la liaison entre le port d'adresses (AP1) du premier microprocesseur (MP1) et le port d'adresses (APR1) de la première mémoire de données (RAM1) correspondante peut être établie de la manière suivante:

a) la sortie d'adresses (B0) de poids le plus faible est reliée à l'entrée d'adresses (B1) dont le poids est plus fort de "m" (égal à 1 par exemple) de la première mémoire de données (RAM1) du premier microprocesseur et les autres sorties d'adresses (B2 à B4) utilisées pour l'adressage, sont reliées de façon correspondante aux autres entrées d'adresses (B2 à B5) dont le poids est plus fort de "m" (1);

b) les "m" (1) sorties d'adresses (B7) de poids le plus fort sont reliées aux "m" (1) entrées d'adresses (B0) de poids le plus faible;

II. la liaison entre le port d'adresses (AP1) du premier microprocesseur (MP1) et le port d'adresses (APR2) de la seconde mémoire de données (RAM2) peut être établie de la manière suivante:

a) la sortie d'adresses (B0) de poids le plus faible du premier microprocesseur (MP1) est reliée à l'entrée d'adresses (B5) dont le poids est plus fort de "n" (n = 5) de la seconde mémoire de données (RAM2) et les autres sorties d'adresses (B1 à B4) utilisées pour l'adressage, sont reliées de façon correspondante aux entrées d'adresses (B6 à B9) dont le poids est plus fort de "n" (5);

b) les "m" (1) bits (B7) de poids le plus fort sont reliés aux "m" (1) entrées d'adresses (B0) de poids le plus faible; et

c) une combinaison binaire (0000) constante est appliquée aux (m–n) entrées d'adresses (B1 à B4) non reliées aux ports d'adresses (AP1) du premier microprocesseur (MP1) de la seconde mémoire de données (RAM2).

2. Système selon la revendication 1, caractérisé en ce que:

I. le port d'adresses (AP2) délivre une adresse formée de deux mots d'adresse (BY1, BY2);

II. la liaison entre le port d'adresses (AP2) du second microprocesseur (MP2) et le port d'adresses (APR2) de la seconde mémoire de données (RAM2), appartenant à ce microprocesseur, peut être établie de la manière suivante:

a) les sorties d'adresses (B0 à B4) de poids le plus faible pour le premier mot d'adresse (BY1), sorties qui déterminent l'étendue d'une zone de fichier pour une voie téléphonique, sont reliées aux entrées d'adresses (B0 à B4) de poids le plus faible;

b) les sorties d'adresses (P0 à P4) de poids plus faible pour le deuxième mot d'adresse (BY2), sorties qui indiquent le nombre (31) de zones de fichier adressables par le second microprocesseur (MP2), sont reliées aux entrées d'adresses (B5 à B9) de poids plus fort;

III. la liaison entre le port d'adresses (AP2) du second microprocesseur (MP2) et le port d'adresses (APR1) de la première mémoire de données (RAM1) peut être établie de la manière suivante:

a) la sortie d'adresses (P0) de poids le plus faible du deuxième mot d'adresse (BY2) est reliée à l'entrée d'adresses (B1) dont le poids est plus fort de "m" (1) et les autres sorties d'adresses (P1 à P4) utilisées pour l'adressage, sont reliées de façon correspondante aux entrées d'adresses (B2 à B5) dont le poids est plus fort de "m" (1); et

b) les "m" sorties d'adresses (B0) de poids le plus fort du premier mot d'adresse (BY1) sont reliées aux "m" (1) entrées d'adresses (B0) de poids le plus faible.

3. Système selon la revendication 1, caractérisé en ce que la sortie d'adresses (B5) ayant le poids plus fort suivant du premier microprocesseur (MP1) est reliée à l'entrée d'adresses (B6) dont le poids est plus fort de "m" (1) de sa première mémoire de données associée et qu'un état logique sur cette sortie d'adresses (B5) ou sur une autre sortie d'adresses, qui n'est pas nécessaire pour l'adressage, est délivré en tant qu'instruction d'inscription (WR) dans le premier et/ou la seconde mémoire de données (RAM2).

4. Système selon la revendication 2, caractérisé en ce qu'une sortie d'adresses (B5) du port d'adresses (AP2) du second microprocesseur (MP2), sortie qui n'est pas nécessaire à l'adressage de la seconde mémoire de données (RAM2), délivre un état logique en tant qu'instruction d'inscription (WR) pour la première mémoire de données.

5. Système selon la revendication 1, caractérisé en ce que la sortie d'adresses (B5) sur laquelle est délivrée l'instruction d'inscription (WR), ou une autre sortie d'adresses (B6), non nécessaire pour l'adressage, est connectée à l'entrée d'adresses (B7) de poids le plus fort de la première mémoire de données (RAM1).

6. Système selon une des revendications précédentes, caractérisé en ce que m=1 et n=5.

FIG 1

FIG 2

FIG 3

# FIG 4

FIG 5

# FIG 6